# EUROPÄISCHE PATENTSCHRIFT

(11) **EP 1 376 795 B1**
(45) Veröffentlichungstag und Bekanntmachung des Hinweises auf die Patenterteilung: **16.03.2016**
(21) Anmeldenummer: 03011796.4
(22) Anmeldetag: 24.05.2003
(51) Int. Cl.: H02B 1/30

(54) **Vorrichtung zum Installieren von Energieleitungen**
Device for installing energy conductors
Dispositif d'installation de conducteurs d'énergie

(30) Priorität: 21.06.2002 DE 10227887; 08.07.2002 DE 10230841; 13.09.2002 DE 10242718
(43) Veröffentlichungstag der Anmeldung: 02.01.2004
(73) Patentinhaber: icotek project GmbH & Co. KG, 73563 Mögglingen (DE)
(72) Erfinder: Ehmann, Bruno, 73563 Mögglingen (DE)
(74) Vertreter: Dr. Weitzel & Partner

(56) Entgegenhaltungen:
- EP-A- 0 562 766
- DE-A- 19 959 185
- DE-U- 29 911 305

## Beschreibung

Die Erfindung betrifft eine Vorrichtung gemäß dem Oberbegriff von Anspruch 1.

Bei herkömmlichen Vorrichtungen der eingangs genannten Art, wie sie z.B. in der DE 42 07 281 beschrieben sind, müssen die Energieleitungen zunächst durch die Tüllen gesteckt und sodann einzeln in die Aussparungen der Bodenbleche eingebracht werden. Sollen die Bodenbleche mit einer Vielzahl von Energieleitungen bestückt werden, ist dies mit einem erheblichen Zeitaufwand verbunden. Zudem können bei den bekannten Tüllen nur steckerlose Leitungen hindurchgeführt werden. In der DE 44 05 328 ist eine Kabeleinführungsvorrichtung offenbart, bei der die zylinderförmigen Dichtungen geschlitzt sind, so dass die Dichtungen auch mit Stecker aufweisenden Leitungen bestückt werden können.

Das eigentliche Kabeleinführungselement, nämlich der Tüllen, ist jedoch nur für jeweils eine Energieleitung geeignet, sodass jedes Kabel mit dem Bodenblech extra verbunden werden muss. Bei einer Vielzahl von Kabeln ist dies nicht nur Zeitaufwendig, sondern auch mit der Gefahr verbunden, dass die Energieleiter beim Bestücken der Bodenbleche verwurstelt werden.

Ein ähnlicher Sachverhalt ist auch in EP 0 052 090 A2, DE 4 020 180 C1 beschrieben.

EP 0 562 766 A1 beschreibt eine Vorrichtung gemäß dem Oberbegriff von Anspruch 1. Dabei umschließen die kabelführenden Tüllen jeweils ein Energiekabel, und sind ihrerseits in einen Betonsockel eingelassen. In einem gewissen axialen Abstand von den Tüllen sind die Kabel durch Blechstreifen hindurchgeführt.

DE 199 59 185 A1 beschreibt eine Kabeldurchführung mit zwei Leisten, die miteinander Aussparungen zum Aufnehmen von Tüllen bilden.

Der Erfindung liegt die Aufgabe zugrunde, eine Vorrichtung gemäß dem Oberbegriff von Anspruch 1 derart zu gestalten, dass das Installieren der Energieleitung erheblich einfacher, schneller und auch mit vorkonfektionierten Energieleitungen erfolgen kann.

Die gestellte Aufgabe wird erfindungsgemäß durch die Merkmale des Anspruches 1 gelöst.

Die Erfindung ist demnach jedenfalls dann verwirklicht, wenn es sich um eine gattungsgemäße Vorrichtung zum Durchführen von Energieleitungen, insbesondere für elektrischen Strom, handelt, bei der die regelmäßig aus MetallBlech bestehende, in Draufsicht rechteckförmigen Außenumriss aufweisende und gestreckte Blechstreifen in Längsrichtung geteilt ist, wobei in den einander zugekehrten Längsseiten der Blechsteifen-Teile die Ausnehmungen ausgebildet sind.

Diese Ausnehmungen können vorzugsweise mit an sich bekannten und die Energieleitungen betriebsgemäß aufnehmenden Kabeldurchführungsleisten, wie sie z.B. in der WO 01/42096 beschrieben sind, abgedeckt werden.

Die Konfektionierung der bereits Stecker aufweisenden Energieleiter, also deren betriebsgemäße Verbindung mit den Leisten, kann maschinell und fabrikmäßig erfolgen, so dass vor Ort nur noch die mit Energieleitern ordnungsgemäß verbundenen Leisten mit dem Blechstreifen verbunden werden müssen. In dem Blechstreifen sind die zu ihrer Längsseite hin offenen Ausnehmungen so bemessen, dass durch sie mehrere Kabel gleichzeitig geführt werden können. Eine Individualisierung und/oder Anpassung der Ausnehmungen in Bezug auf die jeweilige Energieleitung ist somit nicht mehr erforderlich. Dies erfolgt vielmehr durch die Leiste mit passenden Tüllen. Im äußersten Fall könnte der Blechstreifen sogar nur mit einer einzigen Ausnehmung, die regelmäßig einen rechteckförmigen Innenumriss aufweist, versehen sein, die mit einer entsprechenden, sie abdecken Leiste zu versehen wäre. Die Leiste kann aus zwei spiegelbildlich gleichen und kammartigen Stücken bestehen, die miteinander lösbar verbindbar sind und in denen die aus Gummi bestehenden Tüllen form- und kraftschlüssig untergebracht werden können. Eine Verbindung der Leiste mit dem in Längsrichtung geteilten Blechstreifen kann mittels Schrauben oder durch Steckverbindungen erfolgen. Bei Schraubverbindungen sind die Leisten mit den Blechstreifen, lösbar verbindbar. Eine betriebsgemäße Verbindung der Leiste mit den Blechstreifen kann auch ohne Schrauben erfolgen, und zwar z.B. durch Nut-Feder- oder Rastverbindungen. Dabei können am Außenumfang der regelmäßig aus Kunststoff bestehenden Leisten Nuten ausgebildet sein, in welche die aus Metall bestehenden Umrandungen der Ausnehmungen, die in den Blechstreifen ausgebildet sind, formschlüssig und dichtend eingreifen. Die Ausnehmungen in den jeweiligen Blechstreifen haben die Form eines gestreckten U. Beim zusammenfügen zweier Blechstreifen wird eine durchgehende, rechteckförmigen Durchführung für die Energieleiter definiert. Allgemein können die Stücke zum Zwecke der Verbindung Ausnehmungen, Nasen oder dgl. aufweisen, die mit entsprechenden Gegenstücken der Blechstreifen zusammenarbeiten. Hierdurch wird zwischen den Stücken und den Blechstreifen nicht nur eine form- und kraftschlüssige, sondern auch eine dichte Verbindung hergestellt, die insbesondere bei Schaltschränken von besonderer Bedeutung ist.

Das Installieren von Kabeln oder Leitungen im Schaltschrank kann wie folgt durchgeführt werden:
Der Schaltschrank hat für die Zufuhr der Kabel und Leitungen regelmäßig die Bodenseite, die von Rahmenschenkeln eines Rahmengestells umschlossen ist, offen. Zur Abdeckung der Bodenseite können mehrere aneinanderreihbare erfindungsgemäße Bodenbleche vorgesehen sein, die mit ihren Schmalseiten mit den zugekehrten Rahmenschenkeln des Rahmengestells lösbar verbindbar sind. Entlang der einander zugekehrten Längsseiten der Bodenbleche sind zur Längsseite hin offene Aussparungen ausgebildet, die im Betriebszustand mit Leisten abdeckbar sind. Besonders geeignete Leisten zeichnen sich insbesondere dadurch aus , dass sie aus zwei spiegelbildlich ausgebildeten kammartigen Leisten bestehen, in welche die aus Gummi oder Kunststoff bestehenden, würfelförmigen Tüllen schubladenartig eingesteckt bzw. herausgezogen werden können. In jede Leiste können regelmäßig mehrere würfelförmig ausgebildete, passende Öffnungen für die aufgenommenen Kabel aufweisende Tüllen gesteckt werden , wobei sie unter Bildung einer Reihe von Tüllen eine unverrückbare Position einnehmen. Die nach außen gerichteten Seiten der Tüllen schließen bündig mit der Längsseite des Blechstreifens ab. Im Zuge der Installierung kann mit der Aussparung des Bodenbleches sowohl eine bereits konfektionierte Kabelleiste als auch eine Leiste ohne Tüllen verbunden werden. Werden vorkonfektionierte Leisten verwendet, dann kann die eine Leiste mit der Ausnehmung des einen Blechstreifens und die andere Leiste mit der Ausnehmung des anderen Blechstreifens ordnungsgemäß verbunden werden. Dabei können die Blechstreifen aus Handhabungsgründen mit geeignetem Abstand zueinander angeordnet sein. Anschließend werden die einander zugeordneten Leisten/Stücke der Kabeldurchführung miteinander verschraubt, wobei die Tüllen der einen Leiste gegen die Tüllen der anderen Leiste gedrückt werden. Es könnten jedoch auch die benachbarten Blechstreifen miteinander ordnungsgemäß verbunden werden, z.B. durch Verschrauben. Werden nichtvorkonfektionierte Leisten verwendet, dann werden diese zunächst mit den entsprechenden Blechstreifen ordnungsgemäß verbunden, z.B. mittels Schrauben oder Steckverbindungen. Die Blechstreifen sind dabei mit Abstand zueinander so angeordnet, dass ein problemloser Zugang zu den offenen Leisten möglich ist. Danach werden die Tüllen, in denen die Kabel oder Leitungen bereits angeordnet sind, in die kammartigen Leisten schubladenartig und von der offenen Seite her gesteckt. Zwischen jeweils zwei Tüllen sind Trennzinken der Leisten angeordnet, die so bemessen und ausgebildet sind, dass eine sichere und unverlierbare Positionierung der Tüllen in der Leiste gewährleistet ist. Zwischen den Leisten und den Blechstreifen können im Bedarfsfall zusätzlich Tüllen in Form von Gummistreifen angeordnet werden.

Einige Ausführungsbeispiele der Erfindung sind in der Zeichnung schematisch dargestellt und werden im Folgenden näher erläutert.

Es zeigen:
- Fig. 1: Teil eines Schaltschrankes, dessen Bodenseite mit einer Vorrichtung abdeckbar ist,
- Fig. 2: die Vorrichtung nach Fig. 1 in Explosionsdarstellung,
- Fig. 3: eine weitere Ausführung der Vorrichtung, teilweise geschnitten,
- Fig. 3a: einen Schnitt entlang der Linie A-A nach Fig. 3,
- Fig. 3b: den Schnitt nach Fig.3a in Explosionsdarstellung,

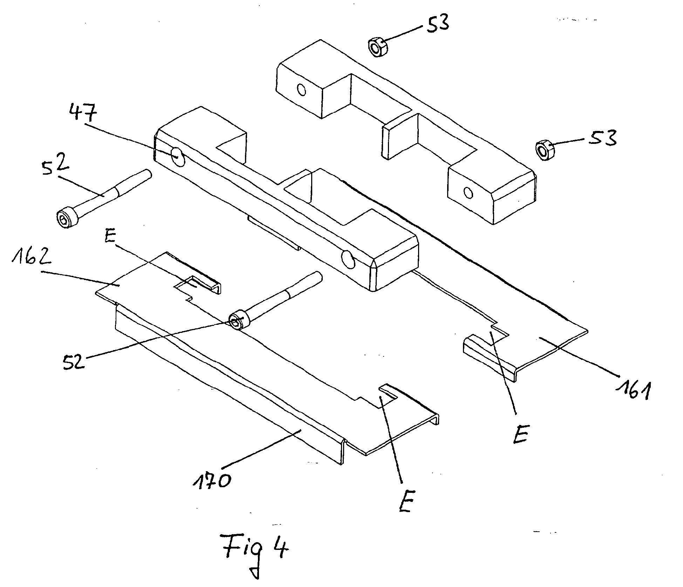

- Fig. 4: eine weitere Ausführung der Vorrichtung, und

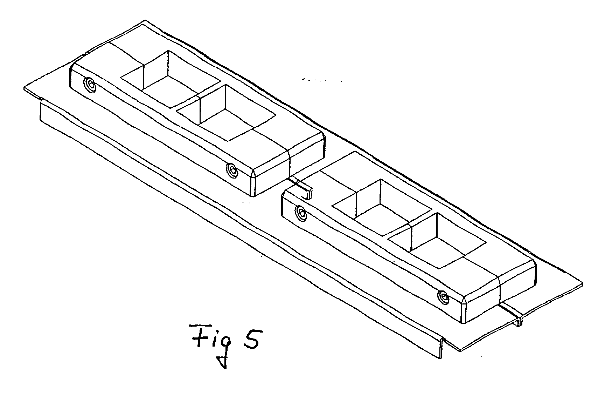

- Fig. 5: die in Fig.4 dargestellte Vorrichtung in Explosionsdarstellung.

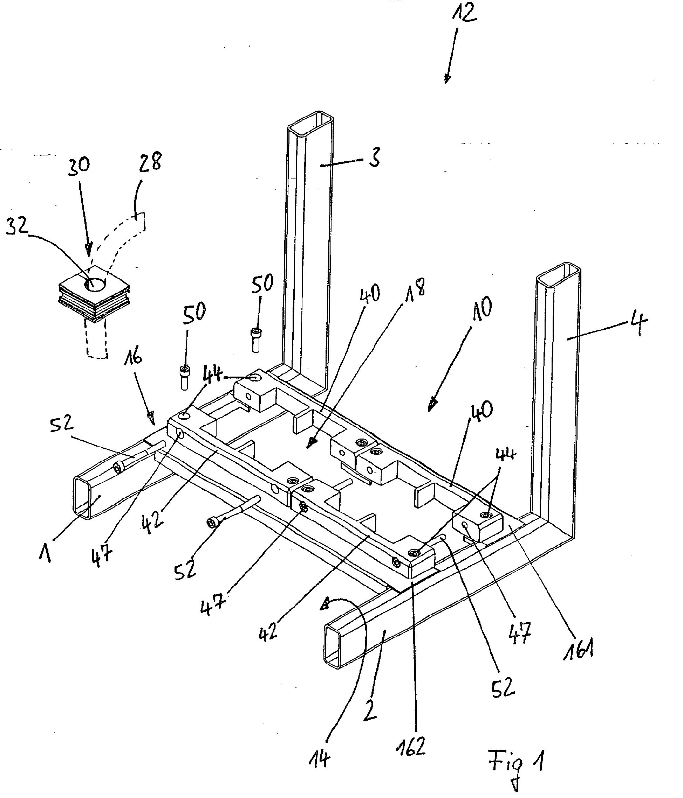

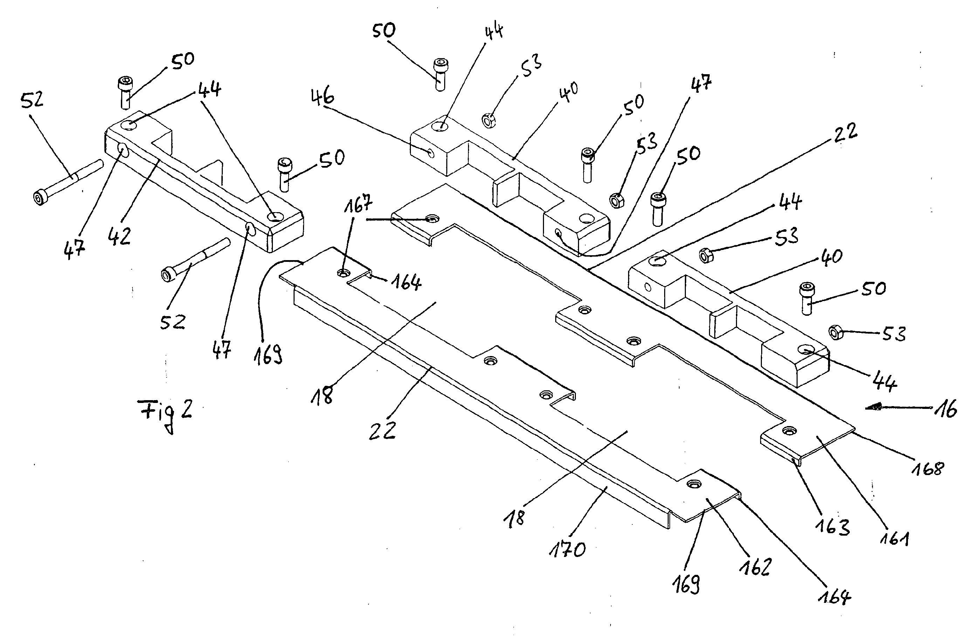

In Fig. 1 ist ein Teil eines Schaltschrankes mit horizontal und vertikal sich erstreckenden Schenkeln 1,2,3,4 dargestellt, in dessen Bodenseite eine Öffnung 14 zum Einführen einer Vielzahl von Energieleitungen, insbesondere elektrischer Leitungen oder Kabel 28, ausgebildet ist. Die als Kabeleinführung ausgebildete Öffnung 14 ist mittels einer Vorrichtung 10 zum Installieren von Energieleitungen 28 abdeckbar. Die Vorrichtung 10 besteht allgemein aus mehreren, die Öffnung 14 abdecken, rechteckförmigen und gestreckten Blechstreifen 16 (vgl. Fig.2), die mindestens eine, vorzugsweise zu ihrer Längsseite 22 hin offene Ausnehmungen 18 für mindestens eine sie betriebsgemäß durchquerende Energieleitung 28 mit Tüllen 30 aufweist. Im vorliegenden Falle sind zwei Ausnehmungen 18 vorgesehen. Der Blechstreifen 16 besteht aus zwei miteinander verbindbaren Blechstreifen 161, 162, zwischen denen die Ausnehmungen 18 ausgebildet sind. Die Ausnehmungen 18 sind mit aus mindestens zwei Stücken 40,42 bestehenden Leisten für die Energieleitungen 28 verbindbar. Die mit den Energieleitungen 28 verbindbaren Tüllen 30 sind mit den Stücken 40,42 unverlierbar verbindbar. Man erkennt, dass die Ausnehmungen 18 in den einander zugekehrten Längsseiten der Blechstreifen 161,162 ausgebildet sind.

Die Stücke 40,42 sind sowohl miteinander als auch mit den Blechstreifen 161, 162 mittels Schrauben 50,52 lösbar verbindbar. Hierfür sind in den Stücken 40,42 und in den Blechstreifen 161, 162 geeignete Öffnungen 44 ,47; 167 vorgesehen.

Die in der Bodenseite des Schaltschrankes ausgebildete Öffnung 14 wird regelmäßig mit mehreren Vorrichtungen 10 abgedeckt, die dann nebeneinander und abstandsfrei angeordnet sind. Zwischen jeweils zwei Vorrichtungen 10 kann eine streifenförmige Tülle aus Gummi oder Kunststoff positioniert sein, der mit den rechtwinklig nach unten abgebogenen Lappen 170 der jeweiligen Vorrichtung 10 in Druckverbindung steht. Innenseitig weisen die Blechstreifen 161,162 ebenfalls Lappen 163,164 gleich Art auf, die zusammen mit nicht näher dargestellten streifenförmigen Tüllen in Druckverbindung bringbar sind. Das Einbringen bzw. Durchführen von Energieleitern in den Schaltschrank kann wie folgt erfolgen:
Die Blechstreifen 161, 162 werden auf die Schenkel 1,2 gelegt und auf geeigneten Abstand voneinander gebracht. Dieser Abstand wird durch die Handhabung mit den einzubringen Leitungen bestimmt und kann bis zum 70 cm betragen. Sind die Energieleiter 28 mit den Stücken 40,42 bereits ordnungsgemäß verbunden, z.B. vorkonfektioniert, dann werden die Stücke 40,42 auf die Blechstreifen 161,162 gemäß Fig.1 gelegt, mit diesen verschraubt und sodann gegeneinander unter Einbringung von Dichtungsstreifen zwischen die Lappen 163,164 geschoben. Anschließend werden die einander zugeordneten Stücke 40,42 mittels Schrauben 52 verbunden. In diesem Zustand werden die komplettierten Vorrichtungen 10 mit den Schenkeln 1, 2 ebenfalls ortsfest, z.B. mittels Schrauben, verbunden.

Das Einbringen der Energieleiter 28 kann jedoch auch so erfolgen, dass die Blechstreifen 161,162 zunächst mit den Stücken 40, 42 verbunden und auf geeigneten Abstand zueinander gebracht werden. Daraufhin werden die kammartigen Stücke 40,42 mit den die Leitungen 28 aufgenommenen Tüllen 30 bestückt, indem diese in die Ausnehmungen schubladenartig und seitlich gesteckt werden. Die Tüllen 30 sind geringfügig grösser bemessen als ihre Aufnahmen in den Stücken 40, 42. Somit wird eine kraft- und formschlüssige Verbindung zwischen den Tüllen 30 und den Stücken 40, 42 gewährleistet. Weitere Einzelheiten einer Leiste der hier in Rede stehenden Art, die für diese Zwecke besonders gut geeignet sind, sind in der WO 01/42096 offenbart und werden zum Gegenstand der vorliegenden Erfindung gemacht.

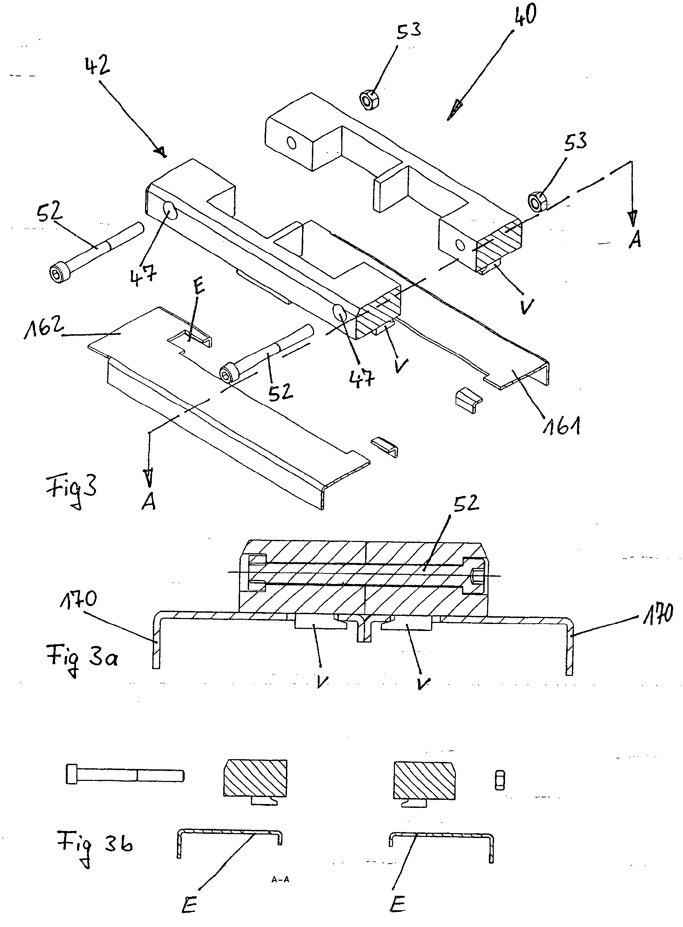

Die Besonderheit der in Fig. 3, 3a, 3b dargestellten Ausführungsform der erfindungsgemäßen Vorrichtung besteht darin, dass die Blechstreifen 161,162 in ihrem waagerechten Abschnitt zwei seitlich positionierte Einschnitte E aufweisen, die mit zugeordneten nasenförmigen Vorsprüngen V der Stücke 40,42 betrieblich verbindbar sind. Die Stücke 40, 42 werden in die Blechstreifen 161,162 von oben nach unten gesteckt, so dass die Vorsprünge V die Einschnitte E von unten hintergreifen (vgl. Fig. 3a). Bei dieser Ausführungsform der Erfindung erübrigt sich eine Schraubverbindung zwischen den Stücken 40,42 und den Blechstreifen 161, 162. Die Lappen 170 sind nach unten gebogen.

## Patentansprüche

1. Vorrichtung (10) zum Installieren von Energieleitungen (28), insbesondere elektrischen Kabeln, Leitungen oder Rohren, in oder an Einrichtungen (12) oder Gebäuden mit mindestens einer Öffnung (14), insbesondere Kabeleinführung für einen Schaltschrank mit horizontal und vertikal sich erstreckenden Schenkeln (1-4), mit mindestens einer die Öffnung (14) zumindest teilweise abdecken und vorzugsweise rechteckförmigen, gestreckten Abdeckplatte (16), die mindestens eine, vorzugsweise zu ihrer Längsseite (22) hin offene Ausnehmung (18) für mindestens eine sie betriebsgemäss durchquerende Energieleitung (28) mit Dichtungskörper (30) aufweist, wobei die Abdeckplatte (16) aus zwei miteinander verbindbaren Platten-Teilern (161,162), zwischen denen die Ausnehmungen (18) ausgebildet sind, besteht, wobei die Platten-Teile (161,162) mit mindestens zwei Durchführungsleisten (40,42) für die Energieleitungen (28) verbindbar sind und wobei die mit den Energieleitungen (28) verbindbaren Dichtungskörper (30) mit den Durchführungsleisten (40,42) unverlierbar verbindbar sind, **dadurch gekennzeichnet, dass** die beiden Platten-Teile (161,162) auf die horizontalen Schenkel (1,2) verschiebbar sind und dass zum Zusammenführen und Schliessen der beiden Durchführungsleisten Schrauben (52) vorgesehen sind, die an den beiden Durchführungsleisten (40,42) in Verschieberichtung der Platten-Teile (161,162) angreifen.

## Claims

1. A device (10) for installing energy lines (28), particularly electric cables, lines or tubes, in or on devices (12) or buildings having at least one opening (14), in particular a cable infeed for a switch cabinet having horizontally and vertically extending legs (1-4) having at least one preferably rectangular, stretched cover plate (16) at least partially covering the opening (14), which plate comprises at least one recess (18) preferably open toward its length side (22) for at least one energy line (28) having a sealing body (30) and running through said recess, the cover plate (16) consisting of two plate parts (161, 162) connectable to one another, between which the recesses (18) are formed, the plate parts (161, 162) being connectable to at least two feed-through ledges (40, 42) for the energy line (28) and the sealing bodies (30) connectable to the energy line (28) being undetachably connectable to the feed-through ledges (40, 42), **characterized in that** the two plate parts (161, 162) are slideable onto the horizontal legs (1,2) and **in that** screws (52) are provided for bringing together and closing the two feed-through ledges, which screws engage the two feed-through ledges (40, 42) in the displacement direction of the plate parts (161, 162).

## Revendications

1. Dispositif (10) destiné à l'installation de conducteurs d'énergie (28), en particulier de câbles électriques, de lignes ou de tubes, au sein ou au niveau des dispositifs (12) ou des bâtiments, comprenant au moins une ouverture (14), en particulier une entrée de câbles pour une armoire de commande avec des branches s'étendant horizontalement et verticalement (1 à 4), comprenant au moins une plaque de recouvrement (16) allongée, de préférence rectangulaire et couvrant l'ouverture (14) au moins partiellement qui présente au moins un évidement (18), de préférence ouvert en direction de son côté longitudinal (22) pour au moins un conducteurs d'énergie (28) le traversant de manière opérationnelle comprenant un corps d'étanchéité (30), la plaque de recouvrement (16) consistant en deux parties pouvant être reliées l'une à l'autre entre lesquelles les évidements (18) sont formés, les parties de la plaque (161, 162) pouvant être reliées à l'aide d'au moins deux barres de mise en oeuvre (40, 42) pour les conducteurs d'énergie (28) et les corps d'étanchéité (30), qui peuvent être reliés aux conduites d'alimentation en énergie (28), pouvant être reliés de manière certaine à l'aide des barres de mise en oeuvre (40, 42), **caractérisé en ce que** les deux parties de la plaque (161, 162) peuvent être déplacées sur la branche horizontale (1, 2) et **en ce que** des vis (52) sont prévues pour l'assemblage et la jonction des barres de mise en oeuvre (52), lesquelles vis se fixent au niveau des deux barres de mise en oeuvre (40, 42) dans le sens du déplacement des parties de la plaque (161, 162).
